# EUROPEAN PATENT APPLICATION

(11) **EP 4 578 795 A1**
(43) Date of publication of application: **02.07.2025**
(21) Application number: 23383391.2
(22) Date of filing: 27.12.2023
(51) Int. Cl.: B65D 75/04, F16L 59/04

(54) **INSULATION BOARD PACKAGE WITH PACKAGING INSERT**

(71) Applicant: URSA Insulation S.A., 28004 Madrid (ES)
(72) Inventor: LOZANO ECHLE, Fernando, 46011 Valencia (ES)
(74) Representative: Zimmermann & Partner Patentanwälte mbB

(57) **Abstract**

Embodiments of an insulation board package are provided herein. The insulation board package contains at least one insulating board for forming wall sections of a self-bearing duct system, a packaging material and a packaging insert (100). The packaging insert has at least one marking (111, 112, 113, 114, 115, 116) on a surface (101) of the packaging insert (100). The marking (111, 112, 113, 114, 115, 116) defines a predetermined template (180, 190) adapted in size and shape to be used when cutting an insulating board cutout (140, 150) from an insulating board so that the insulating board cutout (140, 150) is adapted for use as a wall section of a self-bearing duct system. Further, a method of forming an insulation board package, a method of forming a predetermined template from an insulation board package, a method of forming an insulating board cutout (140, 150) and a method of forming a self-bearing duct section are provided.

## Description

### Field of the Invention

Embodiments hereof relate to an insulation board package, as well as a method of forming an insulation board package, a method of forming a predetermined template from an insulation board package, a method of forming an insulating board cutout and a method of forming a self-bearing duct section are provided.

### Background of the Invention

Duct systems are widely used for heating, ventilation and air conditioning (HVAC) applications. Self-bearing or self-supporting duct systems are assembled from wall sections that include a solid structure which is self-bearing or self-supporting. The solid structure comprises an insulating core, which is made from an insulation material like mineral wool or plastic foam. Metal accessories are used to assemble the duct system or mount it to the structure of a building.

Such duct systems are usually customised to the specific building (site) as several non-straight sections are commonly required for assembling the duct system, i.e. changes in the direction of the duct are required to ensure fluid (e.g. air) distribution at different locations in the building. Therefore, duct systems are usually assembled on site, namely section by section. The individual sections of the duct system may be assembled from several, such as four, wall sections. Usually, an individual duct section is composed of two congruent side wall sections, and two further wall sections which are also congruent to each other and which respectively form the top and the bottom wall of the duct section. Manufacturers usually produce one or a few standardised types of different insulation boards, such as rectangular insulation boards, having two major surfaces formed by the length multiplied with the width of each board and four lateral surfaces extending in its thickness direction. The insulation boards can be cut into shape, thereby forming the wall sections for a section of the duct system. Straight duct sections may be rather simple to form, such as by using the insulation boards as wall sections without having to cut the boards into shape or by cutting grooves into the insulation board, and folding the board to form a straight wall section from a single insulation board. More complex duct shapes, such as non-straight sections, require additional effort to determine the required shape and size of the individual wall sections.

EP 1 532 391 B1 describes an insulation panel for an air conditioning distribution duct. The insulating panel is characterised in that one exterior face of the insulating panel has a plurality of marks.

ES 1 078 898 U describes an insulating panel for the construction of self-supporting heating, ventilation or air conditioning ducts and self-supporting ducts with such panels. The panel is characterised by having several marks on the covering of its first major surface.

Prior art methods and systems for determining the desired shape and size of the individual wall sections have various drawbacks, such as wasting resources, e.g. not being economic or not being environmentally friendly, and being rather complicated and slow to carry out for installers of duct systems.

### Summary of the Invention

Briefly, an insulation board package, a method of forming an insulation board package and a method of forming a predetermined template are provided to overcome at least some of the aforementioned limitations. This object is accomplished by means of an insulation board package according to claim 1, a method of forming an insulation board package according to claim 15 and a method of forming a predetermined template according to claim 16. In particular, the object of the invention is to provide an insulation board package which is equipped with auxiliary means which allow for a simplified determination of the size and shape of individual wall sections made of insulation material, designated as insulation board cutouts, for assembling a duct section of a self-bearing duct system and a simplified manufacture of those duct sections made form insulation board cutouts.

According to an aspect, an insulation board package is provided. The insulation board package contains at least one insulating board, preferentially a plurality of stacked insulating boards, for forming wall sections of a self-bearing duct system, a packaging material and a packaging insert. The packaging insert has at least one marking on a surface of the packaging insert. The marking defines a predetermined template adapted in size and shape to be used when cutting an insulating board cutout from an insulating board so that the insulating board cutout is adapted for use as a wall section of a self-bearing duct system.

The term "packaging insert" refers to an insert disposed within the insulation board package, for example between the major surfaces of two adjacent stacked insulating boards or between the top or bottom insulating board of the stack and the packaging material. Alternatively, the packaging insert might be disposed between a pile of stacked insulating boards and the packing material. The packaging insert is provided separate from the insulation board(s) and separate from the packaging material, particularly the packaging insert is not integrally formed with the insulation board and/or the packaging material. In other words, the packaging insert may not be permanently attached to the insulation board and/or the packaging material. The packaging insert may be made from a material that can be cut to shape with a hand tool, such as with a (carpet) knife or scissors. The packaging insert is preferably selected from cardboard, especially corrugated cardboard. Alternatively, the packaging insert is made of plastic, or paper or laminated paper. The terms "insulation packaging insert" and "packaging insert" are used interchangeably throughout the present disclosure.

The terms "predetermined template" and "template" are used interchangeably throughout the present disclosure. The "predetermined template" may be formed from one or more insulation packaging insert cutout(s). In some embodiments, the predetermined template corresponds to the packaging insert cutout. In specific embodiments a "predetermined template" is composed of at least two "partial predetermined templates" or at least two packaging insert cutouts. Depending on the context used, the term packaging insert cutout means "total packaging insert cutout" or "partial packaging insert cutout".

The term "marking" refers to a polyline - which is preferably a continuous line - and which defines the perimeter of a predetermined template, i.e. the "marking" runs along substantially the entire perimeter of the predetermined template. In other words, the at least one marking is preferably configured to define an entire perimeter of the predetermined template. Each marking is composed of different "sides", whereas a "side of a marking" is a unidirectional section of the marking. This means, a "side" of the marking is a section of the marking, and typically the side of a marking is designed to be a straight line. The terms "marking" and "line" or "polyline" are used interchangeably throughout the present disclosure.

The term "insulation packaging material" refers to a packaging material for protecting and storing insulating boards, such as during transport. The insulation packaging material may be wrapped around the one or more insulating board(s), and partially or fully covers the one or more insulating board(s). The insulation packaging material is made from a material which is sufficiently stable and can provide sufficient protection for the insulating board(s). The insulation packaging material may be made from a material that can be cut to shape with a hand tool, such as with a (carpet) knife or scissors. The packaging material is preferably selected from cardboard, especially corrugated cardboard. Alternatively, the packaging material is made of plastic, methacrylate, and paper, namely plastics, cardboard, corrugated cardboard, or stripes, e.g. of plastic or metal to retain the insulation boards in the form of a package. The terms "insulation packaging material" and "packaging material" are used interchangeably throughout the present disclosure.

Preferentially, the insulation packaging material is used for wrapping at least one insulation board, preferentially a plurality of stacked insulating boards. The insulation packaging material preferably forms the outer or outermost layer of the insulation board package. Typically, the insulation board package has a substantially cuboid shape.

The term "insulating board" is not particularly limited, and it refers to any insulating board which can be used to form a wall section of a self-bearing duct system. In a preferred embodiment, the insulating boards are configured for use in a heating, ventilation, and air conditioning (HVAC) duct system. The insulating boards are preferably dimensionally stable. The terms insulating board, insulation board and insulating panel or insulation panel are used interchangeably.

The insulating boards of the present invention typically comprise an insulating material and a facing in the form of a rigid material with a mechanical strength sufficient such that the insulating boards are dimensionally stable. The rigid material, for example Aluminium, may also be vapour resistant and/or fire resistant. The insulating board may have an insulating core made of mineral wool or a foamed polymer. The mineral wool might be glass wool or stone wool. Additionally, or alternatively, the insulating board may have one or more exterior facing(s), for example made of aluminium, aluminium paper craft, or glass fabric.

In order to form a duct section of a duct system, four or more wall sections may be used. A straight duct section typically includes 4 wall sections. But, for example, an elbow section may include 6 or 8 wall sections or a bypass section may include 6 or 12 wall sections. The wall section can be formed by cutting the insulating board into shape - thereby obtaining an insulating board cutout - with a suitable tool, typically a hand tool. The insulating board cutout may then correspond to the wall section. For some applications, the duct section may be formed by cutting grooves into the insulating board cutout (with a hand tool) and folding the insulating board cutout along the grooves into the desired shape for the specific duct section to be formed. For example, grooves may be formed in case of preparing a wall section for a straight duct section, while cutting the insulating board into shape may be carried out in case of preparing a wall section for an elbow section. Non-straight duct sections may then be formed of the four or more wall sections by stapling and/or taping the wall sections together. The term wall section is to be understood as corresponding to any of the walls used to build a duct section, e.g. a top wall, a bottom wall and any side wall.

The at least one marking may be arranged on any surface of the packaging insert.

The at least one marking is not particularly limited as long it is executed in such a manner to be visibly distinguishable from the material of the packaging insert itself. For example, the at least one marking may be stamped on, punched in or arranged in the form of perforations on the packaging insert. The stamping might be effected by applying colour to the surface of the package insert ("cold-stamping") or by applying a hot stamp to the surface of the package insert, so that a burned mark becomes visible on package insert surface. The stamp may have the form of a roller. In a preferred embodiment, the marking(s) is printed on the surface of the packaging insert. The marking(s) may differ in colour in comparison to the respective surface of the packaging insert. Illustratively, the marking(s) may be executed as durable and dense line. The line may be a solid, i.e. a continuous line or a discontinuous line, such as a dotted line or a dashed line. In a preferred embodiment, the at least one marking is durable and dense. The packaging insert and the at least one marking preferably differ in colour.

The surface of the packaging insert on which the marking(s) is contained may further include a label - e.g. a number, a letter or a combination of number(s) and/or letter(s) - adjacent to each marking on the surface. This enables a user to directly identify the size and shape of the insulating board cutout that can be obtained with the specific marking. Alternatively, in case of several markings on one surface, the different markings may be visually executed in a different manner, such as a different colour or a different type of line and/or different thicknesses of the individual lines to enable a user to directly identify the size and shape of the insulating board cutout that can be obtained with the specific marking. The surface of the packaging insert may further contain a QR-code, which directs the user to a user manual on how to generate insulating board cutouts after having prepared predetermined templates by cutting the packaging insert along the at least one marking applied on the surface of the packaging insert.

The at least one marking on the surface of the packaging insert, is designed to form a predetermined template for use when cutting an insulating board cutout. The marking(s) preferably runs along substantially the entire perimeter of the predetermined template. The packaging insert may be configured to be cut along the at least one marking to form the predetermined template for the insulating board cutout. The predetermined template may be configured to define an outer shape of an insulating board cutout.

The predetermined template may be configured to be placed on a major surface of the insulating board. The major surface, i.e. the surface extending perpendicularly to the thickness of the insulation board, is configured to be formed into an inner wall side or an outer wall side of a particular duct section. The proportions of the predetermined template, i.e. size and shape, may correspond to the proportions of the insulating board cutout to be obtained, i.e. the surface area of the predetermined template might be congruent with the surface area of the corresponding insulating board cutout. The insulating board cutout can be obtained by placing the predetermined template on an insulating board and cutting the insulating board along the marking, i.e. the perimeter of the predetermined template.

In another embodiment, the surface area of the predetermined template is not congruent with the surface area of the corresponding insulating board cutout. Instead, for instance, two predetermined templates - also designated as partial predetermined templates - are used to form an assembly of partial predetermined template (so-called "compound predetermined template") by placing two partial predetermined templates adjacent to each other such that at least one corresponding side of the first partial predetermined templates abuts with the at least one corresponding side of the second partial predetermined template. In principle, a compound predetermined template can be also formed from three or more partial predetermined templates arranged in a manner as previously described for a compound predetermined template composed of two partial predetermined templates. The insulating board cutout can be obtained by placing the compound predetermined template on an insulating board and cutting the insulating board along the marking, i.e. the perimeter of the compound predetermined template.

The insulation board package, and in particular the packaging insert, according to embodiments of the present disclosure allows for a simplified determination and generation of insulating board cutouts for forming a particular duct section. The user or installer does not need to calculate the size and shape of individual wall sections and draw cutting lines on the insulating panel, but instead may make use of the marking(s) on the packaging insert to cut out a template and use this predetermined template to form the insulating board cutout. This reduces the time necessary to assemble a duct section and avoids errors in calculating and drawing cutting lines and thus, reduces wastage due to unusable duct sections. In comparison to insulation boards with markings directly applied to at least one of its major surfaces, the same predetermined template according to the invention allows to generate an unlimited number of insulating board cutouts of the same size and shape.

In the following different embodiments of the first aspect of the invention are specified which is directed to an "insulation board packaging comprising a package insert", whereas in the following the feature "package insert" is specified in more detail.

The packaging insert described herein also allows for easily identifying and optimising the number of insulating board cutouts that may be obtained from one single insulation panel. Several templates may be cut out (e.g. a template on another surface of the packaging insert or a template from another insulation packaging insert) and each cutout (i.e. each template) may be placed on one insulation panel, thereby enabling the user to easily determine how to obtain a maximum number of insulating board cutouts from one specific insulating board.

The marking(s) on the packaging insert and the predetermined templated obtained therefrom can be reused for several different insulating boards. Additionally, the marking on the packaging insert could also be used as a template for insulating boards not contained in that package. Prior art systems include printing lines on every single insulating board. The insulation board package according to the invention, and in particular the packaging insert, described herein allows for reducing resources needed for manufacturing, both economically as well as ecologically.

The marking(s) being designed to form the predetermined template are particularly adapted for an insulating board cutout that forms a non-straight wall section of the duct system. The non-straight wall section may be one of an elbow section, a bypass section, a corner section, a reduction section, and a double dynamic branch.

According to an embodiment, the packaging insert includes a set of markings (i.e. at least a first set of markings), wherein each marking defines one predetermined template having a template area. The template area is the area enclosed by one marking of the set of markings, such that the template area is enclosed by the entire perimeter of the marking. The set of markings may include at least 3 markings. In one illustrative embodiment, the set of markings may include at least 6 markings and/or typically up to 10 markings.

In one embodiment, the template area defined by each of the markings within the set of markings has a substantially similar shape. A "similar shape" - as defined in geometry - means that corresponding angles of different figures of "similar shape" defined between corresponding two sides of a particular marking are substantially the same for the remaining markings of the set of markings while the size of each similar shape defined by each marking is different.

This means each of the markings of the set of markings differs from the other markings within the same set of markings in the size of their respective defined template areas. Each marking in the set of markings may enable forming a template for a particular type of non-straight wall section, such as an elbow or bypass section. The user or installer may then select the respective marking of the set of markings which is suitable in size and shape for the desired application. Having one set of markings with the same shape may be sufficient for forming one template for various types of non-straight wall sections, such as an elbow section and a bypass section.

In one embodiment, the set of markings is arranged such that markings defining smaller template areas are arranged within or abutting markings defining larger template areas. Illustratively, a distance between a corresponding side of two adjacent markings may be about 5 cm. The distance might be also smaller or larger, typically between 1 cm and 20 cm, preferentially smaller than 15 cm and even more preferred smaller than 10 cm.

Typically, some of the sides of one marking may abut with some sides of another marking - e.g. the next larger size marking, or the next smaller size marking - and the remaining sides may be arranged within the next larger marking. Alternatively, each marking may be entirely arranged within the next larger size marking.

In one embodiment, at least one side, preferably two sides, of each of the markings within a set of markings is aligned with one side, preferably two sides, of the remaining markings of the set of markings. The term "aligned with" is to be understood such that the side of one marking at least partially overlaps or is partially identical with a side of another marking. For example, a side of a larger size marking may be longer than a corresponding side of a smaller size marking. In such a case, the marking may only be printed on the packaging insert once for the respective side of the largest size marking and can be used for the smaller sized markings as well. Typically, the larger size marking and the smaller size marking have in in this embodiment at least one corner point in common.

According to an embodiment, the packaging insert may include a first set of markings and a second set of markings. Typically, the template area defined by each of the markings within the first set of markings may have a substantially similar shape and/or each of the markings of the first set of markings may differ from the other markings within the first set of markings in the size of their respective defined template areas. Additionally, or alternatively, the template area defined by each of the markings within the second set of markings may have a substantially similar shape and/or each of the markings of the second set of markings may differ from the other markings within the second set of markings in the size of their respective defined template areas.

The insulation board package according to the invention, and in particular the template area defined by each of the markings of the second set of markings on the package insert may have a different shape than the template area defined by each of the markings of the first set of markings. The first set of markings and the second set of markings may be each designed to form templates for different non-straight sections of the duct system. Illustratively, the first set of markings may be designed for forming an elbow section, whereas the second set of markings may be designed for forming a reduction section. An elbow section is a duct section which allows for a change of flow direction, for example a change of flow direction of 90° or 45°. A reduction section is a duct section in which a flow cross-section is reduced.

Typically, the packaging insert is flat and/or substantially extends only in one plane (i.e. along two dimensions). The packaging insert preferably has two surfaces. Different sets of markings may be arranged either on the same surface of the packaging insert or on both surfaces of the packaging insert. Furthermore, the insulation board package may include more than one packaging insert. For example, the insulation board package may include two or three packaging inserts to enable forming insulating board cutouts for each of the commonly used types of non-straight wall sections. The plurality of packaging inserts may be provided loosely or as a stapled stack.

The second set of markings may be spaced apart from the first set of markings. For example, the first set of markings may be arranged on a first surface of the packaging insert, whereas the second set of markings may be arranged on a second surface of the packaging insert. In an embodiment, both surfaces of the packaging insert are covered by several sets of markings.

The packaging insert may also include more than two sets of markings, such as three or four sets of markings. Typically, each set of markings is spaced apart from other sets of markings. Each set of markings may define a template area differing in shape from the others sets of markings.

The packaging insert is not limited to a particular geometrical shape, and also irregular shapes are envisioned for the packing insert. In a preferred embodiment the packaging insert has a substantially rectangular shape and includes two sides which are perpendicular to each other.

In one illustrative embodiment, both sides of the packaging insert have substantially the same length. In other words, the packaging insert has a substantially square shape. Both sides of the packaging insert may be equal or smaller than the width of the at least one insulating board. Additionally, both sides of the packaging insert may be smaller than the length of the at least one insulating board.

In another illustrative embodiment, both sides of the packaging insert have a different length. In other words, the packaging insert has a non-square rectangular shape. A first side or length of the packaging insert may be equal or smaller than the length of the at least one insulation board. Additionally, or alternatively, a second side or width of the packaging insert may be equal or smaller than the width of the at least one insulation board.

According to an embodiment, the packaging insert is foldable. The insulation board package may thus comprise the packaging insert in folded form. This allows for increasing the number of sets of markings that fit onto one packaging insert. Further, a user may find a single folded packaging insert simpler to handle than a set of individual and possibly loose packaging inserts.

The packaging insert may be folded to obtain at least two commensurate packaging insert segments. The terms "packaging insert segment(s)", "package insert segment(s)", "insert segment(s) and "segment(s)" are used interchangeably in this disclosure. For example, the packaging insert may have a crease line or the like to simplify folding the packaging insert into two or more segments. The packaging insert may be provided in folded form comprising two or three commensurate packaging insert segments. In case of three segments, the packaging insert may include two crease lines. The packaging insert may also be folded to obtain at least two non-commensurate packaging insert segments. For example, the packaging insert may be provided in folded form comprising two commensurate packaging insert segments and one non-commensurate packaging insert segment. The packaging insert may be folded into the packaging insert segments over the short or the long side of the packaging insert. In other words, the packaging insert may include one or more crease lines extending along the short side or along the long side.

In an embodiment, the packaging insert has at least one marking on a surface of the packaging insert to define a predetermined template defining an outer shape of an insulation board cutout that forms a wall section of a self-bearing duct system.

According to an embodiment, the insulation board package, in particular the insulation packaging material, wrapping the at least one or the plurality of stacked insulating boards, has at least one marking on a surface of the insulation packaging material. The marking defines a predetermined template adapted in size and shape to be used when cutting an insulating board cutout from an insulating board so that the insulating board cutout is adapted for use as a wall section of a self-bearing duct system. In this embodiment, both the insulation packaging material and the package insert are provided with at least one marking on their respective surfaces.

The insulation boards may be insulation boards according to any embodiment described herein. The insulating boards are preferably used for a heating, ventilation, and air conditioning (HVAC) duct system.

In an embodiment, the insulating board has an insulating core made of mineral wool or a foamed polymer. The mineral wool might be glass wool or stone wool. Additionally, the insulating board might have an exterior facing, preferably made of aluminium.

The wall section formed from the insulating board is preferably a non-straight wall section of the duct system, such as an elbow section, a bypass section, a branched section, a corner section, a reduction section and a double dynamic branch. A non-straight section is a section of the duct system in which the direction of flow changes. A straight section is a section of the duct system in which the direction of flow remains unchanged. A branched section is a section of the duct system that allows for part of the flow to be diverted to one side, while the remaining part of fluid flow continues straight on or substantially straight on, or it is a duct system that allows for part of the flow to be diverted to one side and the remaining part of the fluid flow to be diverted to another side. The shape and the size of the respective sections of the duct system are typically selected based on a desired mass flow distribution and the direction each partial mass flow should take after the point of diversion.

The non-straight wall sections formed from the insulating board may typically have a length and/or a width of between 10 to 100 cm, preferably 10 to 55 cm. Additionally, 2 cm or more may be added to the width and/or the length for folding the insulating board cutout, for example for side wall sections which are angled.

According to another aspect, a method of forming an insulation board package is provided. The insulation board package may be in accordance with any aspect or embodiment of the present disclosure. The method includes providing at least one insulation board. The insulation board may be in accordance with any aspect or embodiment of the present disclosure. The method includes providing a packaging insert. The packaging insert might be of rectangular shape. The packaging insert may be in accordance with any aspect or embodiment of the present disclosure. The method further includes dividing the rectangular packaging insert into smaller packaging insert segments of rectangular shape by folding the packaging insert over the short or the long side of the rectangular packaging insert; and wrapping the folded packaging insert and the at least one insulating board with a packaging material. A packaging insert segment, also referred to as smaller packaging insert segment, is a portion of the packaging insert, the size of which is determined by how the package insert is folded. If the packaging insert is folded over the long side of the package insert, both packaging insert and packaging insert segment typically have one side in common, which is typically the width of the packaging insert. If the packaging insert is folded over the short side of the package insert, both packaging insert and packaging insert segment typically have one side in common, which is typically the same length of the packing insert.

The method includes folding the packaging insert into at least two packaging insert segments. Preferentially, after folding the at least two packaging insert segments are commensurate.

The method may include folding the packaging insert one or more times along one or more crease line(s).

According to an aspect, a method of forming a predetermined template from an insulation board package is provided. The insulation board package is or may be in accordance with any aspect or embodiment of the present disclosure. The method comprises providing a packaging insert, in particular according to any embodiment described herein. The method further comprises cutting the packaging insert along the at least one marking to form a predetermined template.

According to an embodiment, the predetermined template may be formed from a first packaging insert cutout and a second packaging insert cutout, that is the total predetermined template is comprised of two partial predetermined templates. Cutting the packaging insert along the at least one marking may define a first packaging insert cutout. The method may further comprise forming the second packaging insert cutout from a second marking. The second marking may be arranged on the same packaging insert as the first marking, such as on the same surface as the first marking or on a second surface of the packaging insert, or alternatively the second marking may be arranged on a second packaging insert. The method further includes forming the predetermined template by arranging the first packaging insert cutout (i.e. first partial predetermined template) adjacent the second packaging insert cutout i.e. (second partial predetermined template).

The second packaging insert cutout may be formed from the packaging insert or by providing a second packaging insert or by providing a packaging material with markings. The second packaging insert may correspond to the packaging insert according to any embodiment described herein. Forming the second packaging insert cutout may further include cutting the packaging insert along a further marking - e.g. a second marking on the same surface as the first marking or a second marking on a second surface of the packaging insert - or may further include cutting the second packaging insert along at least one marking or may further include cutting the packaging material along at least one marking.

The method may further include forming further packaging insert cutouts, such as a third or fourth packaging insert cutout. The method may further include forming the predetermined template by arranging the further packaging insert cutout(s) adjacent at least one of the first and second packaging insert cutouts. Alternatively, the method may further include forming the predetermined template by arranging a further packaging material cutout(s) adjacent at least one of the first and second packaging insert cutouts.

According to another aspect, a method of forming an insulating board cutout for a wall section of a self-bearing duct system is provided. The method includes forming the predetermined template according to any embodiment described herein. The method further includes arranging the predetermined template on a surface of an insulating board; and forming the insulating board cutout by cutting the insulating board along a perimeter of the predetermined template.

According to another aspect, a method of forming a self-bearing duct section of a self-bearing duct system is provided. The method includes forming at least two insulating board cutouts according to any embodiment described herein. The method further includes assembling the self-bearing duct section from the at least two insulating board cutouts, and at least two further wall sections, in particular straight wall sections.

The at least two insulation board cut-outs preferably have congruent major surfaces, which are used pairwise and each respective insulation board cut-out forms the respective top or bottom wall part of a section of the self-bearing duct system.

### Brief Description of the Drawings

The components in the Figures are not necessarily to scale, instead emphasis being placed upon illustrating the principles of the invention. Moreover, in the Figures, like reference signs designate corresponding parts. In the drawings:
Figure 1A illustrates a top view of a surface of a packaging insert according to an embodiment of the invention.
Figure 1B illustrates a section of Figure 1A.
Fig. 2A illustrates a 3D view of an elbow duct section according to the invention and an insulating board cutout according to the invention.
Fig. 2B illustrates a top view of an insulation board cutout for an elbow duct section according to the invention.
Fig. 2C illustrates a 3D view of an elbow duct section and an insulating board cutout according to the invention.
Fig. 2D illustrates a side view of an insulation board cutout for an elbow duct section according to the invention.
Fig. 3A illustrates a 3D view of a bypass duct section according to the invention and an insulating board cutout according to an embodiment of the invention.
Fig. 3B illustrates a top view of an insulating board cutout for a bypass duct section according to an embodiment of the invention.
Fig. 3C illustrates a 3D view of a bypass duct section according to the invention and an insulating board cutout according to an embodiment of the invention.
Fig. 3D illustrates a side view of an insulating board cutout for a bypass duct section according to an embodiment of the invention.
Fig. 4 illustrates a top view of a predetermined template for forming an insulating board cutout according to an embodiment of the invention. The predetermined template consists of two partial predetermined templates.
Fig. 5A illustrates a foldable packaging insert in a partially folded form according to an embodiment of the invention.
Fig. 5B illustrates a foldable packaging insert in largely folded form according to an embodiment of the invention.
Fig. 5C illustrates a side view of a foldable packaging insert in folded form according to an embodiment of the invention.
Fig. 5D illustrates a foldable packaging insert in partially folded form according to an embodiment of the invention.
Fig. 5E illustrates a foldable packaging insert in partially folded form according to an embodiment of the invention.
Fig. 5F illustrates a side view of a foldable packaging insert in folded form according to an embodiment of the invention.
Fig. 5G illustrates a foldable packaging insert in partially folded form according to an embodiment of the invention.
Fig. 5H illustrates a foldable packaging insert in partially folded form according to an embodiment of the invention.
Fig. 5I illustrates a side view of a foldable packaging insert in folded form according to an embodiment of the invention.

### Detailed description and preferred embodiments of the invention

In the following detailed description, reference is made to the accompanying drawings, which form a part hereof, and in which are shown by way of illustration specific embodiments of the invention.

As used herein, the terms "having", "containing", "including", "comprising" and the like are open ended terms that indicate the presence of stated elements or features, but do not preclude additional elements or features.

It is to be understood that other embodiments may be utilised, and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims. Each embodiment and each aspect so defined may be combined with any other embodiment or with any other aspect unless clearly indicated to the contrary.

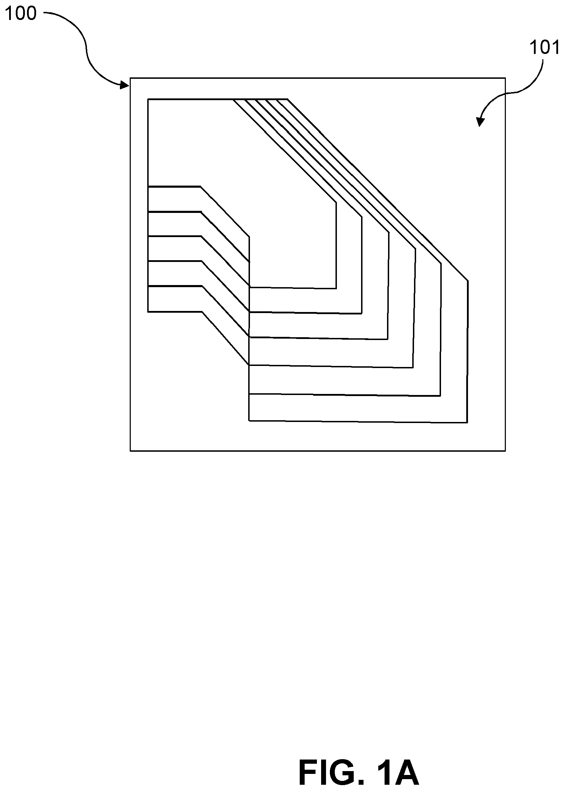

Figure 1A shows a top view of a surface 101 of a packaging insert 100 according to an embodiment of the present disclosure. The surface 101 includes a set of markings.

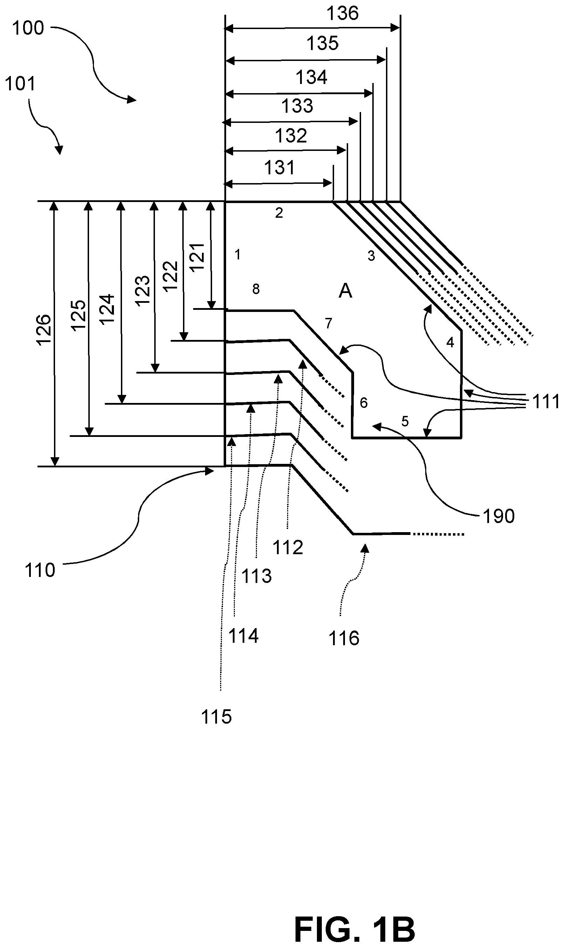

Figure 1B shows a section of the packaging insert 100 shown in Figure 1A. The surface 101 includes a set of markings 110.

The set of markings 110 includes several markings 111, 112, 113, 114, 115, 116. Each of the markings are executed as a durable line, preferably in black colour. For ease of illustration, only marking 111 is fully depicted in Figure 1B, whereas markings 112, 113, 114, 115, 116 are only partially drawn. Thus, Figure 1B only shows a part of the perimeter of markings 112, 113, 114, 115, 116. In this example the set of markings 110 comprises six markings 111, 112, 113, 114, 115, 116, but the amount of markings belonging to one set of markings might be higher or smaller than six.

Each of the markings defines a template area A. Reference numeral "A" in Figure 1B illustrates the template area for marking 111. Each of the other markings 112, 113, 114, 115, 116 of the set of markings 110 also defines a template area, which differs from the template area A defined by marking 111. Marking 111 is composed of different unilateral sections 1, 2, 3, 4, 5, 6, 7, 8 of the marking. The unilateral sections 1, 2, 3, 4, 5, 6, 7, 8 of the marking form the sides of the predetermined template 190 and thus those sides form the perimeter of the template area A.

Each marking 111, 112, 113, 114, 115, 116 of the set of markings 110 in Figure 1B has a substantially similar shape (so-called "similar forms"). In this example, each marking 111, 112, 113, 114, 115, 116 includes 8 sides. The angles made between each adjacent sides of one marking are substantially identical for each pair of corresponding sides of the remaining markings of the set of markings 110.

The size of the template area A continuously increases from the innermost marking 111 towards the outermost markings 116.

In the example illustrated in Figure 1B, two sides of each marking 111, 112, 113, 114, 115, 116 overlap, i.e. a first side 121, 122, 123, 124, 125, 126 of each marking overlaps and a second side 131, 132, 133, 134, 135, 136 of each marking overlaps. A section of the first side 122, 123, 124, 125, 126 of larger size markings is identical with the first side 121 of smaller size markings 111. In other words, the first side 121 of marking 111 is superimposed on the first sides 122, 123, 124, 125, 126 of the remaining markings of a set of markings and each of those first sides just differ in its corresponding length. Consequently, the markings may share sections of some of the sides of the markings and may have one corner point in common. The same concept of superimposition applies between the second side 131 of marking 111 and the second sides 132, 133, 134, 135, 136 of the remaining markings within the same set of markings.

The packaging insert 100 may contain labels for identifying each marking of the set of markings (not shown in Figure 1). This may help the user in identifying the marking suitable for a particular template size or shape. The packaging insert 100 may contain labels for identifying different sides of the markings, such as illustrated by the numbers 1-8 in Figure 1B. In case a template is to be formed by combining two or more markings (that is two or more partial predetermined templates), this may help the user to identify which sides of a specific marking to use for the template. The surface of the packaging insert 100 may further contain a QR-code (not shown in Figure 1), which directs the user to a user manual on how to generate insulating board cutouts 140, 150 after having prepared predetermined templates 190 by cutting the packaging insert along the at least one marking applied on the surface of the packaging insert.

The packaging insert 100 shown in Figure 1 may be suitable for forming a predetermined template 190 to generate an insulation board cutout 140, 150 for any type of non-straight wall sections, such as elbows and bypasses. The template may be particularly suitable for forming insulation board cutouts 140, 150 to be used as top or bottom wall section of a duct section.

For example, each of the markings 111, 112, 113, 114, 115, 116 can be used to cut out a predetermined template 190. The predetermined template 190 directly corresponds to an elbow section template, which can be used to generate an insulating board cutout 140, 150.

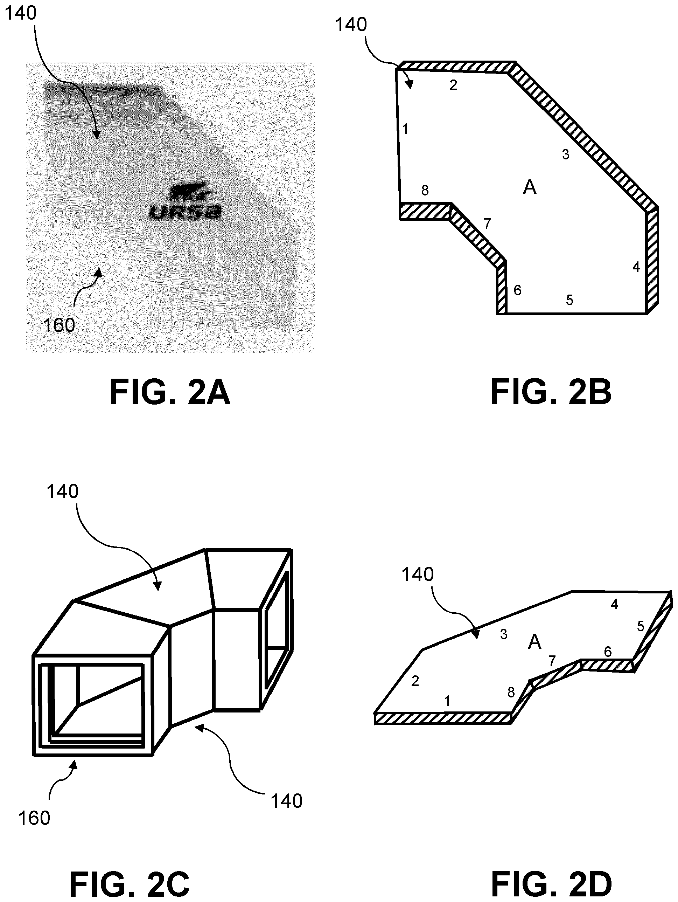

Figures 2A and 2C show top and side views of an elbow duct section 160 having 4 wall sections, namely two side wall sections, a top and a bottom wall section, wherein the top and the bottom wall sections were formed from an insulating board cutout 140 by applying a predetermined template according to the invention.

Figures 2B and 2D illustrate top and side views of an insulating board cutout 140 which can be used to form the top and bottom wall sections for the elbow duct section 160 shown in Figures 2A and 2C. The insulating board cutout 140 is formed by arranging the predetermined template on a surface of an insulating board, and cutting the insulating board along a perimeter of the predetermined template.

The insulating board cutout 140 defines the same area A on the major surfaces of the insulation board as the template area A on the packaging insert defined by one of the markings 111, 112, 113, 114, 115, 116. The perimeter of the insulating board cutout 140 is defined by sides 1, 2, 3, 4, 5, 6, 7, 8 corresponding to the unilateral sections 1, 2, 3, 4, 5, 6, 7, 8 defined by one of the markings.

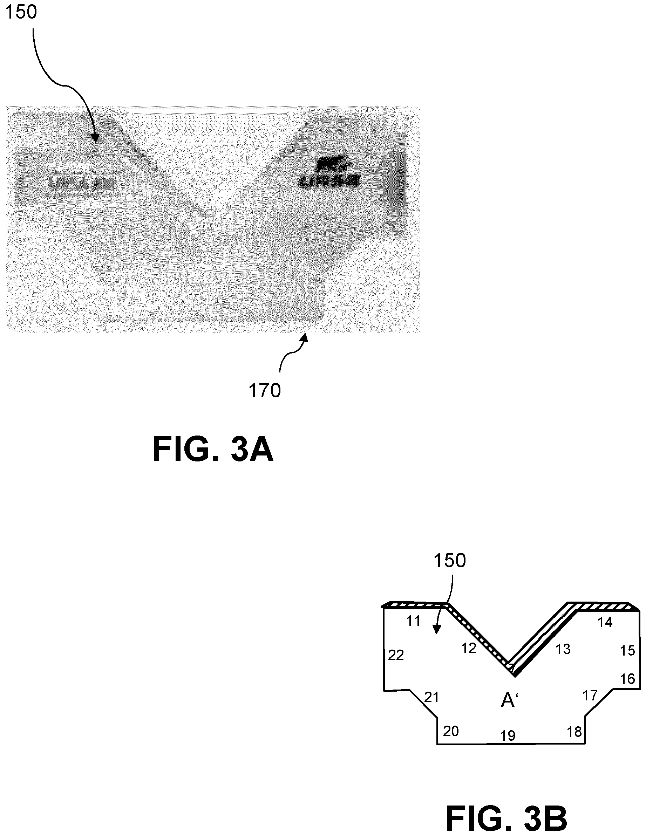

As illustrated in Figures 3A-3D, in case a bypass section 170 is desired, two packaging insert cutouts can be prepared by cutting the insulation packaging insert along the marking(s) separately to form a first and a second packaging insert cutout. The first and second packaging insert cutouts - that is the two partial predetermined templates - can be combined to form a predetermined bypass section template. The predetermined bypass section template can be formed by arranging the first and second packaging insert cutouts adjacent each other, and preferably abutting each other. Two markings - and their corresponding predetermined templates - may be used, such as identical markings 111 from different packaging inserts or two differently sized markings, e.g. marking 111 and marking 112. Alternatively, a packaging insert cutout can be prepared by cutting the insulation packaging insert along one marking from one single packaging insert cutout. The only packaging insert cutout can be prepared to immediately form a predetermined bypass section template, which again can be used as cutting aid to prepare a top or bottom wall for a bypass section.

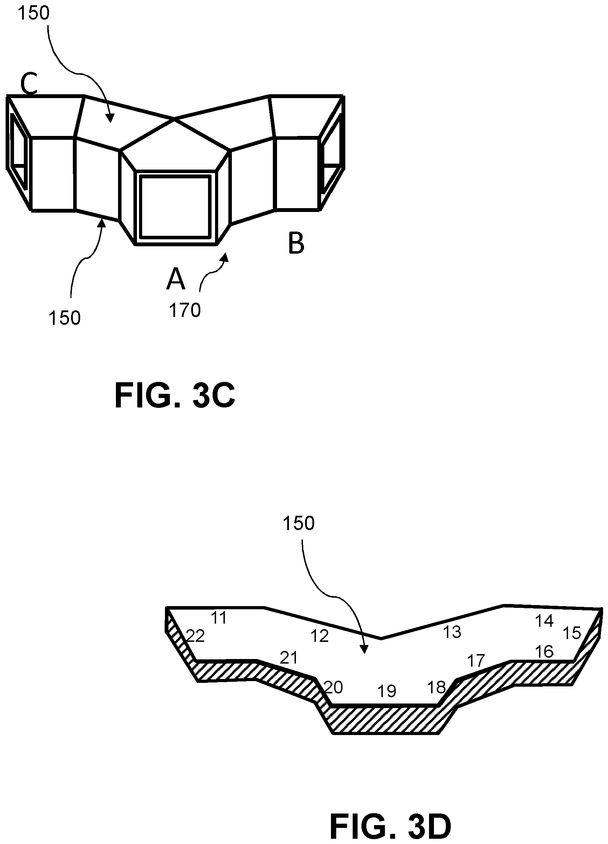

Figures 3A and 3C show top and side views of a bypass duct section 170 having several wall sections, in particular several side wall sections, a top and a bottom wall section, wherein the top and the bottom wall sections are formed from an insulating board cutout 150 by applying a predetermined template according to the invention.

Figures 3B and 3D illustrate top and side views of an insulating board cutout 150 which can be used to form the top and bottom wall sections for the bypass duct section 170 shown in Figures 3A and 3C. The insulating board cutout 150 is formed by arranging the predetermined template on a surface of an insulating board, and cutting the insulating board along a perimeter of the predetermined template.

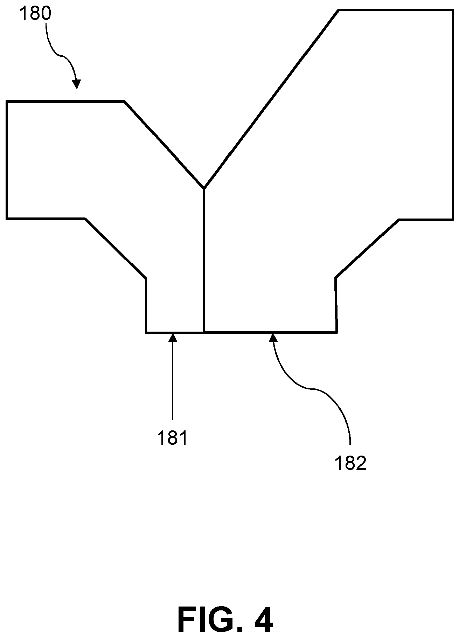

As illustrated in figure 4, to form the predetermined template which can be used to prepare the insulation board cutout 150 for the bypass duct section 170, a first 181 and a second packaging insert cutout 182 can be combined to form a predetermined bypass section template. Figures 3B and 3D include labels 11-22 for each side of the insulating board cutout 150 which correspond to the unilateral sides of a marking. The first packaging insert cutout may correspond in size and shape to sides 11, 12, 22, 21, 20 and partially side 19, while the second packaging insert cutout may correspond in size and shape to sides 13 to 18 and partially side 19. In other words, the first and second packaging insert cutout may abut each other at a point of intersection between sides 12 and 13, and approximately half-way between side 19.

The insulation board cutout 150 for the bypass duct section 170 can then be prepared by cutting the insulating board along a perimeter of the predetermined template.

The insulating board cutout 150 defines the same area A' as the combined template area defined by the first and second packaging insert cutouts.

Figure 4 illustrates a top view of a predetermined template 180 for forming an insulating board cutout. The predetermined template 180 includes a first packaging insert cutout 181 (obtained from a first partial predetermined template) and a second packaging insert cutout 182 (obtained from a second partial predetermined template). The predetermined template 180 can be formed by placing or arranging the first packaging insert cutout 181 adjacent the second packaging insert cutout 182.

The first packaging insert cutout 181 can be formed by cutting the insulation packaging insert along the at least one marking. The second insulation packaging insert cutout 182 can be formed from a second marking on the insulation packaging insert, e.g. from a marking arranged on the same surface of the insulation packaging insert in a certain distance from a first marking, or on another surface of the insulation packaging insert, or from a second marking on a second insulation packaging insert.

The predetermined template 180 may be formed by combining several insulation packaging insert cutouts which differ in size and/or shape. For example, first insulation packaging insert cutout 181 may be formed from marking 111 illustrated in Figure 1B, which defines a smaller size template area A, while second insulation packaging insert cutout 182 may be formed from marking 114, which defines a larger size template area. In this example, the two insulation packaging insert cutouts have the same shape, but differ in size.

An insulation board cutout for forming a wall section of a branched duct section can then be prepared by cutting an insulating board along a perimeter of the predetermined template.

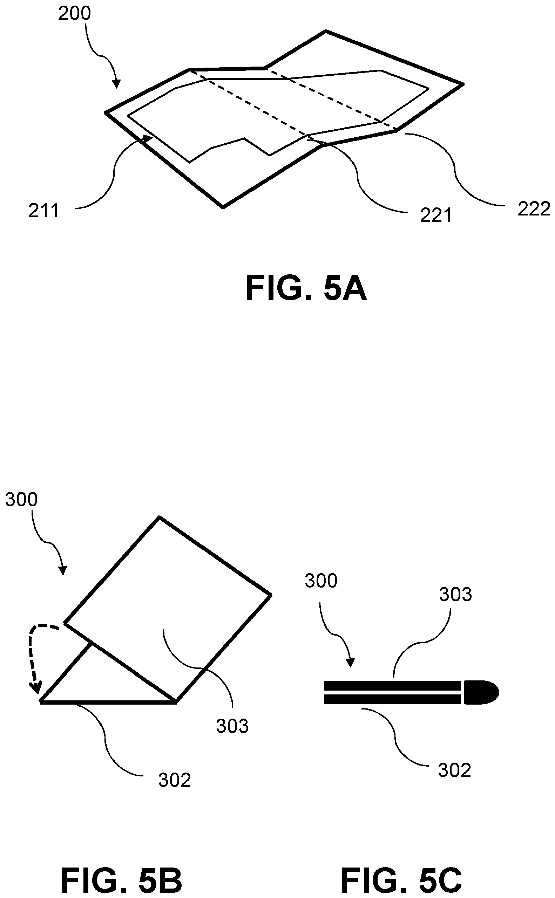

Figure 5A illustrates a foldable packaging insert 200 in a partially folded form according to an embodiment of the invention. The packaging insert 200 includes a marking 211 on one surface. The packaging insert 200 may include one or more crease lines 221, 222 to assist a user in folding the packaging insert 200 into two or more segments (202, 203, 204), i.e. packaging inserts segments. In the specific example shown in Figure 5A, the packaging insert includes two crease lines. The packaging insert 200 has already been partially pre-folded along the two crease lines 221, 222. The terms "packaging insert segment(s)", "package insert segment(s)", "insert segment(s) and "segment(s)" are used interchangeably in this disclosure.

Figure 5B illustrates a foldable packaging insert 300 in largely folded form according to an embodiment of the invention. The packaging insert 300 is folded into two commensurate insert segments 302, 303 by folding along a crease line (not visible in Figure 5B). The dashed arrow indicates a direction for further folding the packaging insert. Figure 5C illustrates a side view of the foldable packaging insert 300 in fully folded form.

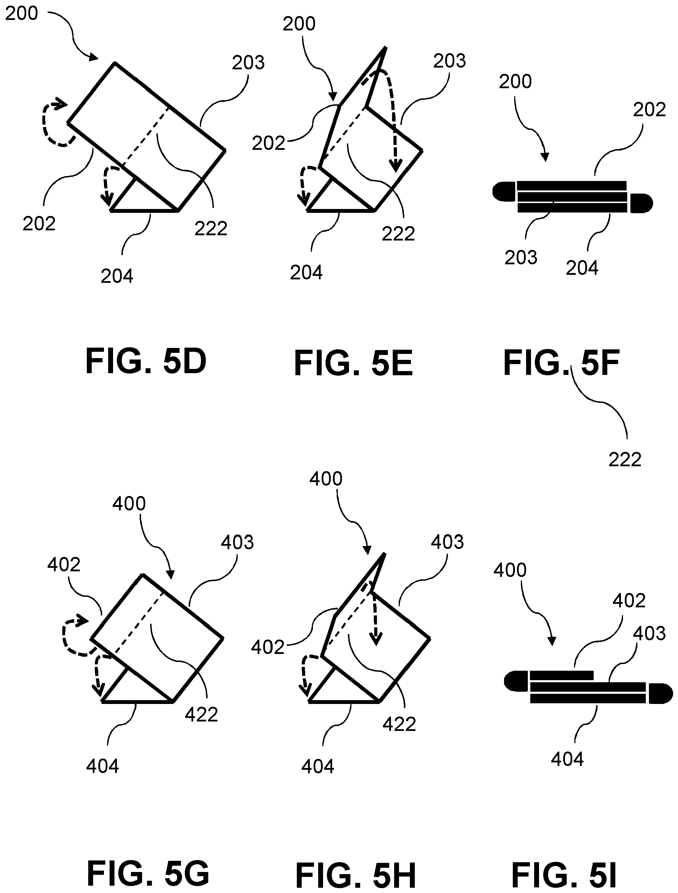

Figure 5D illustrates the foldable packaging insert 200 of Figure 5A in a partially folded form. The packaging insert has largely been folded along the first crease line (not visible in Figure 5D, but visible in Figure 5A). The two dashed arrows indicate the directions for further folding the packaging insert along the first and second crease lines 221, 222. Figure 5E illustrates the foldable packaging insert 200 of Figure 5A in a largely folded form. The packaging insert has largely been folded along the first crease line (not visible in Figure 5D, but visible in Figure 5A), and the second crease line 222. The packaging insert 200 is folded into three commensurate insert segments 202, 203, 204 by folding along the first and second crease lines 221, 222. Figure 5F illustrates a side view of the foldable packaging insert 200 in fully folded form.

Figure 5G illustrates a foldable packaging insert 400 in partially folded form. The packaging insert has largely been folded along a first crease line (not visible in Figure 5G). The two dashed arrows indicate the directions for further folding the packaging insert 400 along the first crease line (not shown) and a second crease line 422. Figure 5H illustrates the foldable packaging insert 400 of Figure 5G in a largely folded form. The packaging insert 400 is folded into two commensurate insert segments 403, 404 and one non-commensurate segment 402 by folding along the first and second crease line 422. Figure 5I illustrates a side view of the foldable packaging insert 400 in fully folded form.

Aspects and embodiments of the invention may be defined by the following clauses.
1. An insulation board package containing at least one insulation board, preferentially a plurality of stacked insulating boards, for forming wall sections of a self-bearing duct system, a packaging material and a packaging insert (100, 200, 300, 400), wherein the packaging insert has at least one marking (111, 112, 113, 114, 115, 116, 211) on a surface (101) of the packaging insert (100, 200, 300, 400), the marking (111, 112, 113, 114, 115, 116, 211) defines a predetermined template (180, 190) adapted in size and shape to be used when cutting an insulating board cutout (140, 150) from an insulating board so that the insulating board cutout (140, 150) is adapted for use as a wall section of a self-bearing duct system; and in particular wherein the insulating boards are configured for use in a heating, ventilation, and air conditioning (HVAC) duct system.
2. The insulation board package of clause 1, wherein the predetermined template (180, 190) is adapted for preparing an insulating board cutout (140, 150) that forms a non-straight wall section of the duct system, and in particular wherein the non-straight wall section is one of an elbow section, a bypass section, a corner section, a reduction section, or a double dynamic branch.
3. The insulation board package of any one of the preceding clauses, wherein the at least one marking (111, 112, 113, 114, 115, 116, 211) runs along substantially the entire perimeter of the predetermined template (180, 190).
4. The insulation board package of any one of the preceding clauses, wherein the packaging insert (100, 200, 300, 400) includes a first set of markings (110) wherein each marking (111, 112, 113, 114, 115, 116, 211) defines one predetermined template having a template area (A), preferably the first set of markings (110) includes at least 3 markings.
5. The insulation board package of clause 4, wherein the template area (A) defined by each of the markings within the first set of markings (110) has a substantially similar shape.
6. The insulation board package of clause 4 or 5, wherein each of the markings (111, 112, 113, 114, 115, 116, 211) of the first set of markings (110) differs from the other markings within said first set of markings (110), in the size of their respective defined template areas (A).
7. The insulation board package of any one of clauses 4 or 5 or 6, further including at least a second set of markings spaced apart from the first set of markings (110), and wherein the template area (A) defined by each of the markings of the at least second set of markings has a different shape than the template area (A) defined by each of the first set of markings (110).
8. The insulation board package of any one of the preceding clauses, wherein both surfaces of the packaging insert (100, 200, 300, 400) are each covered by at least one set of markings (110).
9. The insulation board package of any one of the preceding clauses, wherein the packaging insert (100, 200, 300, 400) is folded.
10. The insulation board package of any one of the preceding clauses, wherein the packaging insert (100, 200, 300, 400) or the folded packaging insert has a substantially rectangular shape and includes two sides which are perpendicular to each other.
11. The insulation board package of clause 10, wherein both sides of the packaging insert (100, 200, 300, 400) or the folded packaging insert have the same length.
12. The insulation board package of clause 11, wherein the sides of the packaging insert (100, 200, 300, 400) or the folded packaging insert are equal or smaller than the width of the at least one insulating board.
13. The insulation board package of any one of clauses 1 to 10, wherein both sides of the packaging insert (100, 200, 300, 400) or the folded packaging insert have a different length.
14. The insulation board package of clause 13, wherein the length of the packaging insert (100, 200, 300, 400) or the folded packaging insert is equal or smaller than the length of the at least one insulation board and the width of the packaging insert (100, 200, 300, 400) is equal or smaller than the width of the at least one insulation board.
15. A method of forming an insulation board package of any one of clauses 9 to 14, comprising:
   providing at least one insulation board;
   providing a packaging insert (100, 200, 300, 400);
   dividing the packaging insert (100, 200, 300, 400) into smaller packaging insert segments (202, 203, 204, 302, 303, 402, 403, 404) of rectangular shape by folding the packaging insert (100, 200, 300, 400) over the short or the long side of the packaging insert (100, 200, 300, 400);
   wrapping the folded packaging insert (100, 200, 300, 400) and the at least one insulating board with a packaging material.
16. A method of forming a predetermined template (180, 190) from an insulation board package according to any one of clauses 1 to 14, comprising:
   providing a packaging insert (100, 200, 300, 400);
   cutting the packaging insert (100, 200, 300, 400) along the at least one marking to form the predetermined template (180, 190).
17. The method of clause 16, wherein cutting the packaging insert (100, 200, 300, 400) along the at least one marking defines a first packaging insert cutout (181), the method further comprising:
   forming a second packaging insert cutout (182) from a second marking on the packaging insert (100, 200, 300, 400) or from a second marking on a second packaging insert; and
   arranging the first packaging insert cutout (181) adjacent the second packaging insert cutout (182).
18. A method of forming an insulating board cutout (140, 150) for a wall section of a self-bearing duct system, comprising:
   forming the predetermined template (180, 190) according to clause 16 or 17;
   arranging the predetermined template (180, 190) on a major surface of an insulating board; and
   forming the insulating board cutout (140, 150) by cutting the insulating board along the perimeter of the predetermined template (180, 190).
19. A method of forming a self-bearing duct section (160, 170) of a self-bearing duct system, comprising:
   forming at least two insulating board cutouts (140, 150) according to clause 18;
   assembling the self-bearing duct section (160, 170) from the at least two insulating board cutouts (140, 150), and at least two further wall sections.

It is to be understood that other embodiments may be utilised, and structural or logical changes may be made without departing from the scope of the present invention. The description, therefore, is not to be taken in a limiting sense, and the scope of the present invention is defined by the appended claims. The embodiments being described use specific language, which should not be construed as limiting the scope of the appended claims.

## Claims

1. An insulation board package containing at least one insulation board, preferentially a plurality of stacked insulating boards, for forming wall sections of a self-bearing duct system, a packaging material and a packaging insert (100, 200, 300, 400), wherein the packaging insert has at least one marking (111, 112, 113, 114, 115, 116, 211) on a surface (101) of the packaging insert (100, 200, 300, 400), the marking (111, 112, 113, 114, 115, 116, 211) defines a predetermined template (180, 190) adapted in size and shape to be used when cutting an insulating board cutout (140, 150) from an insulating board so that the insulating board cutout (140, 150) is adapted for use as a wall section of a self-bearing duct system; and in particular wherein the insulating boards are configured for use in a heating, ventilation, and air conditioning (HVAC) duct system.

2. The insulation board package of claim 1, wherein the predetermined template (180, 190) is adapted for preparing an insulating board cutout (140, 150) that forms a non-straight wall section of the duct system, and in particular wherein the non-straight wall section is one of an elbow section, a bypass section, a corner section, a reduction section, or a double dynamic branch.

3. The insulation board package of any one of the preceding claims, wherein the at least one marking (111, 112, 113, 114, 115, 116, 211) runs along substantially the entire perimeter of the predetermined template (180, 190).

4. The insulation board package of any one of the preceding claims, wherein the packaging insert (100, 200, 300, 400) includes a first set of markings (110) wherein each marking (111, 112, 113, 114, 115, 116, 211) defines one predetermined template having a template area (A), preferably the first set of markings (110) includes at least 3 markings.

5. The insulation board package of claim 4, wherein the template area (A) defined by each of the markings within the first set of markings (110) has a substantially similar shape.

6. The insulation board package of claim 4 or 5, wherein each of the markings (111, 112, 113, 114, 115, 116, 211) of the first set of markings (110) differs from the other markings within said first set of markings (110), in the size of their respective defined template areas (A).

7. The insulation board package of any one of claims 4 or 5 or 6, further including at least a second set of markings spaced apart from the first set of markings (110), and wherein the template area (A) defined by each of the markings of the at least second set of markings has a different shape than the template area (A) defined by each of the first set of markings (110).

8. The insulation board package of any one of the preceding claims, wherein both surfaces of the packaging insert (100, 200, 300, 400) are each covered by at least one set of markings (110).

9. The insulation board package of any one of the preceding claims, wherein the packaging insert (100, 200, 300, 400) is folded.

10. The insulation board package of any one of the preceding claims, wherein the packaging insert (100, 200, 300, 400) or the folded packaging insert has a substantially rectangular shape and includes two sides which are perpendicular to each other.

11. The insulation board package of claim 10, wherein both sides of the packaging insert (100, 200, 300, 400) or the folded packaging insert have the same length.

12. The insulation board package of claim 11, wherein the sides of the packaging insert (100, 200, 300, 400) or the folded packaging insert are equal or smaller than the width of the at least one insulating board.

13. The insulation board package of any one of claims 1 to 10, wherein both sides of the packaging insert (100, 200, 300, 400) or the folded packaging insert have a different length.

14. The insulation board package of claim 13, wherein the length of the packaging insert (100, 200, 300, 400) or the folded packaging insert is equal or smaller than the length of the at least one insulation board and the width of the packaging insert (100, 200, 300, 400) is equal or smaller than the width of the at least one insulation board.

15. A method of forming an insulation board package of any one of claims 9 to 14, comprising:
providing at least one insulation board;
providing a packaging insert (100, 200, 300, 400);
dividing the packaging insert (100, 200, 300, 400) into smaller packaging insert segments (202, 203, 204, 302, 303, 402, 403, 404) of rectangular shape by folding the packaging insert (100, 200, 300, 400) over the short or the long side of the packaging insert (100, 200, 300, 400);
wrapping the folded packaging insert (100, 200, 300, 400) and the at least one insulating board with a packaging material.

16. A method of forming a predetermined template (180, 190) from an insulation board package according to any one of claims 1 to 14, comprising:
providing a packaging insert (100, 200, 300, 400);
cutting the packaging insert (100, 200, 300, 400) along the at least one marking to form the predetermined template (180, 190).

17. The method of claim 16, wherein cutting the packaging insert (100, 200, 300, 400) along the at least one marking defines a first packaging insert cutout (181), the method further comprising:
forming a second packaging insert cutout (182) from a second marking on the packaging insert (100, 200, 300, 400) or from a second marking on a second packaging insert; and
arranging the first packaging insert cutout (181) adjacent the second packaging insert cutout (182).

18. A method of forming an insulating board cutout (140, 150) for a wall section of a self-bearing duct system, comprising:
forming the predetermined template (180, 190) according to claim 16 or 17;
arranging the predetermined template (180, 190) on a major surface of an insulating board; and
forming the insulating board cutout (140, 150) by cutting the insulating board along the perimeter of the predetermined template (180, 190).

19. A method of forming a self-bearing duct section (160, 170) of a self-bearing duct system, comprising:
forming at least two insulating board cutouts (140, 150) according to claim 18;
assembling the self-bearing duct section (160, 170) from the at least two insulating board cutouts (140, 150), and at least two further wall sections.
